Europäisches Patentamt

European Patent Office

Office européen des brevets

(19)

(11) Numéro de publication : **0 635 730 A1**

(12) **DEMANDE DE BREVET EUROPEEN**

(21) Numéro de dépôt : **94401580.9**

(22) Date de dépôt : **08.07.94**

(51) Int. Cl.[6] : **G01S 17/58, G01S 7/48**

(30) Priorité : **16.07.93 FR 9308757**

(43) Date de publication de la demande :
**25.01.95 Bulletin 95/04**

(84) Etats contractants désignés :
**GB**

(71) Demandeur : **THOMSON-CSF**
**173, Boulevard Haussmann**
**F-75008 Paris (FR)**

(72) Inventeur : **Defour, Martin, Thomson-CSF**
**SCPI,**
**B.P. 329**
**F-92402 Courbevoie Cédex (FR)**

Inventeur : **Grossmann, Benoist,**
**Thomson-CSF**
**SCPI,**
**B.P. 329**
**F-92402 Courbevoie Cédex (FR)**
Inventeur : **Rajbenbach, Henri, Thomson-CSF**
**SCPI,**
**B.P. 329**
**F-92402 Courbevoie Cédex (FR)**
Inventeur : **Huignard, Jean-Pierre,**
**Thomson-CSF**
**SCPI,**
**B.P. 329**
**F-92402 Courbevoie Cédex (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

(54) **Vélocimètre à hologramme dynamique.**

(57) L'invention concerne un vélocimètre à holo-gramme dynamique, comportant une source de lumière cohérente (1) délivrant un faisceau lumineux (F1) de fréquence $f_1$ séparé par une lame (2) en un faisceau (F2) pour éclairer un objet animé d'une vitesse radiale $V_r$ et en un faisceau de pompe (F3), des moyens de mélange du faisceau (F4) rétroréfléchi par l'ob-jet et du faisceau (F3) de pompe comportant un milieu d'interaction photoréfractif (5).

Dans le milieu d'interaction 5, une modula-tion spatiale d'intensité lumineuse induit un hologramme dynamique inscrit dans un réseau d'indices de réfraction (R).

Le faisceau de pompe (F3) traverse des moyens de décalage en fréquence (4) avant d'interférer, dans le milieu d'interaction (5), avec le faisceau rétroréfléchi (F4). Le véloci-mètre comporte une source de lumière impulsionnelle cohérente (7) émettant un faisceau de lecture (F5) vers le milieu d'interaction (5).

Pour que le faisceau de lecture soit diffracté par le réseau d'indice et détecté par des moyens de détection (10), les moyens de décalage en fréquence (4) sont réglés pour que la différence de fréquences entre le faisceau de pompe (F3) et le faisceau réfléchi (F4) interférant dans le milieu d'interaction (5), soit inférieure à une valeur prédéterminée.

Application à la mesure de vitesse de mobiles à partir du décalage en fréquence subi par le faisceau de pompe.

FIG.1

EP 0 635 730 A1

L'invention se rapporte au domaine de la mesure de la vitesse d'objets mobiles par effet Doppler, en utilisant des ondes dites "optiques" du domaine spectral optique pour réaliser une telle mesure.

La connaissance de la vitesse de déplacement d'un objet est, dans bon nombre d'applications, une nécessité ; ainsi :

- pour identifier une cible évoluant à distance, il est intéressant de connaître son spectre de vibrations pour augmenter le nombre d'informations spécifiant la cible au niveau de sa nature ou de son état de fonctionnement ; la mesure de ce spectre de vibration passe par celle de la vitesse de déformation de la cible ;
- pour surveiller une zone de l'espace dans laquelle on souhaite repérer toute intrusion d'objets mobiles ;
- pour le pilotage d'aéronefs, en particulier le pilotage d'hélicoptères qui peut nécessiter la connaissance du vecteur vitesse air et la détection des gradients de vent.

La mesure de vitesse par effet Doppler consiste à déterminer le décalage en fréquence qui existe entre un faisceau lumineux éclairant un objet en mouvement et ce faisceau rétroréfléchi par l'objet, ce décalage étant directement proportionnel à la vitesse radiale de l'objet. La connaissance de ce décalage est appelée ci-après information Doppler.

L'information Doppler peut être obtenue par application de la détection hétérodyne dans le domaine des fréquences optiques (en particulier dans le domaine proche infrarouge) . La détection hétérodyne est largement utilisée dans le domaine des hyperfréquences et des radiofréquences pour augmenter le rapport signal/bruit en recalant la fréquence de réception sur la fréquence centrale d'un filtre de bande passante donnée.

La détection hétérodyne consiste, dans l'application envisagée, à faire interférer sur un détecteur des ondes de fréquence $f_S$ réfléchies par un objet mobile et les ondes de fréquence $f_l$ d'un oscillateur local, l'ensemble de ces ondes étant issu d'une même source lumineuse cohérente. Le signal électrique de détection fourni par le détecteur est alors modulé à la fréquence de battement $\Delta f = f_l - f_S$, ce qui permet de déterminer la valeur de $f_S$ connaissant celle de $f_l$, et par là même la valeur de la vitesse radiale du mobile.

Cependant, ce type de détection présente l'inconvénient majeur de ne pouvoir être utilisé que pour un champ d'observation d'angle faible typiquement de l'ordre de $10^{-3}$ radians. En effet, le détecteur n'étant pas ponctuel, le signal fourni résulte d'une moyenne spatiale de l'intensité lumineuse reçue, moyenne qui dépend de la différence des angles d'incidence des ondes réfléchies et locales.

En particulier, la valeur de l'angle solide pour lequel la moyenne spatiale permet de conserver un rapport signal/bruit suffisant est égale à $\lambda /D$, où $\lambda$ est

la longueur d'onde d'émission de la source lumineuse et D le diamètre de la pupille d'entrée. Par exemple, pour une longueur d'onde de 1 $\mu$m et un champ de vue de Imilliradian, le diamètre maximal de la pupille d'entrée de l'optique de réception est de 1 mm. La sélectivité angulaire qui apparaît correspond en fait à la classique loi d'antenne dans le domaine des ondes hyperfréquences. La valeur maximale des diamètres de pupille d'entrée alors obtenue entraîne une limitation importante de la portée de la détection.

L'incompatibilité entre le champ de vue et la portée ne peut alors être levée qu'en utilisant des sources de longueur d'onde nettement plus élevées, telles que le laser $CO2$ émettant à 10,6 $\mu$m, associées à des moyens de déflexion adaptés délivrant des faisceaux de différentes directions. Un tel système est décrit par exemple dans le brevet FR 2 541 786. Mais les moyens mis en oeuvre dans ce type de solution sont délicats à régler et coûteux (en particulier, nécessité d'un système de refroidissement pour le détecteur).

L'invention vise à pallier les inconvénients précités, en s'affranchissant en particulier de la dépendance entre le champ de vue et la longueur d'ondes de l'oscillateur local.

Pour atteindre cet objectif, l'invention propose d'éviter la formation d'une moyenne spatiale sur le détecteur en réalisant, en amont, un hologramme dynamique à l'aide du signal utile rétroréfléchi par la cible dont on cherche à déterminer la vitesse. Un tel hologramme est obtenu en inscrivant des interférences entre les ondes du signal utile et celles de l'oscillateur local dans un milieu de type photoréfractif. L'information Doppler est alors obtenue par diffraction, dans ce milieu, d'une onde de lecture indépendante lorsque la fréquence des ondes de l'oscillateur local est calé sur celle des ondes du signal utile à un $1/\tau$ près, $\tau$ étant la constante de temps du matériau utilisé comme milieu photoréfractif. Le calage en fréquence correspond alors au décalage dû à l'effet Doppler. La lecture par un faisceau suffisamment différencié du faisceau de pompe permet d'effectuer une mesure de grande sensibilité.

Il est à noter que les matériaux photoréfractifs tels que $Bi_{12}SiO_2 0$ (BSO), ou $LiNBO_3$ ou $BaTiO_3$, ou GaAs sont habituellement utilisés pour amplifier les ondes lumineuses provenant d'un objet afin de réaliser une imagerie active. Ce type d'application est décrit notamment dans l'article de R. IMBERT et al,. paru dans "OPTICS LETTERS" volume 13, 988 p. 327.

Plus précisément, l'invention a pour objet un vélocimètre à hologramme dynamique, comportant une source de lumière cohérente délivrant un faisceau lumineux de fréquence $f_1$ pour éclairer un objet animé d'une vitesse radiale $V_{r'}$ des moyens de mélange du faisceau émis par la source cohérente après rétroréflexion par l'objet et du faisceau dit de pompe émis par ladite source, des moyens de détection pour délivrer un signal modulé en fonction de l'objet détecté par le faisceau d'éclairement et des moyens d'analyse de ce signal, caractérisé en ce que les moyens de mélange comporte un milieu d'interaction dans lequel une modulation spatiale d'intensité lumineuse induit un hologramme dynamique inscrit dans un réseau d'indices de réfraction, en ce que le faisceau de pompe traverse des moyens de décalage en fréquence avant d'interférer, dans le milieu d'interaction, avec le faisceau rétroréfléchi par l'objet, et en ce que le vélocimètre comporte une source de lumière impulsionnelle cohérente émettant un faisceau de lecture vers le milieu d'interaction pour être diffracté par le réseau d'indice et détecté par les moyens de détection lorsque les moyens de décalage en fréquence sont réglés pour que la différence de fréquences entre le faisceau de pompe et le faisceau réfléchi interférant dans le milieu d'interaction, soit inférieure à une valeur prédéterminée.

De manière préférentielle, la fréquence de la source impulsionnelle cohérente de lecture est choisie pour que ce faisceau soit le moins possible absorbé par le milieu d'interaction, ce milieu étant préférentiellement un milieu photoréfractif en GaAs. La fréquence de lecture peut, de plus, être également choisie pour être fortement absorbée par l'atmosphère de manière à diminuer l'influence du fond de ciel.

Afin d'éviter la formation d'interférences parasites, le dispositif selon l'invention comporte avantageusement des moyens de discrimination des faisceaux de pompe et de lecture qui se dirigent vers le milieu d'interaction. Ces moyens de discrimination peuvent inclure notamment une lame séparatrice, qui peut être un cube séparateur de polarisation lorsque la discrimination entre les faisceaux de lecture et de pompe est basée sur une polarisation croisée, ou une lame dichroïque lorsque les fréquences des faisceaux de lecture et de pompe sont différentes.

D'autres caractéristiques et avantages apparaîtront à la lecture de la description qui suit, faite en regard de la figure unique annexée qui représentent respectivement :
- la figure 1, le schéma d'un premier exemple de réalisation du vélocimètre selon l'invention, mettant en oeuvre un faisceau de lecture de fréquence différente de celle du faisceau de pompe ;
- la figure 2, le schéma d'un second exemple de réalisation mettant en oeuvre un faisceau de lecture et un faisceau de pompe de polarisations croisées.

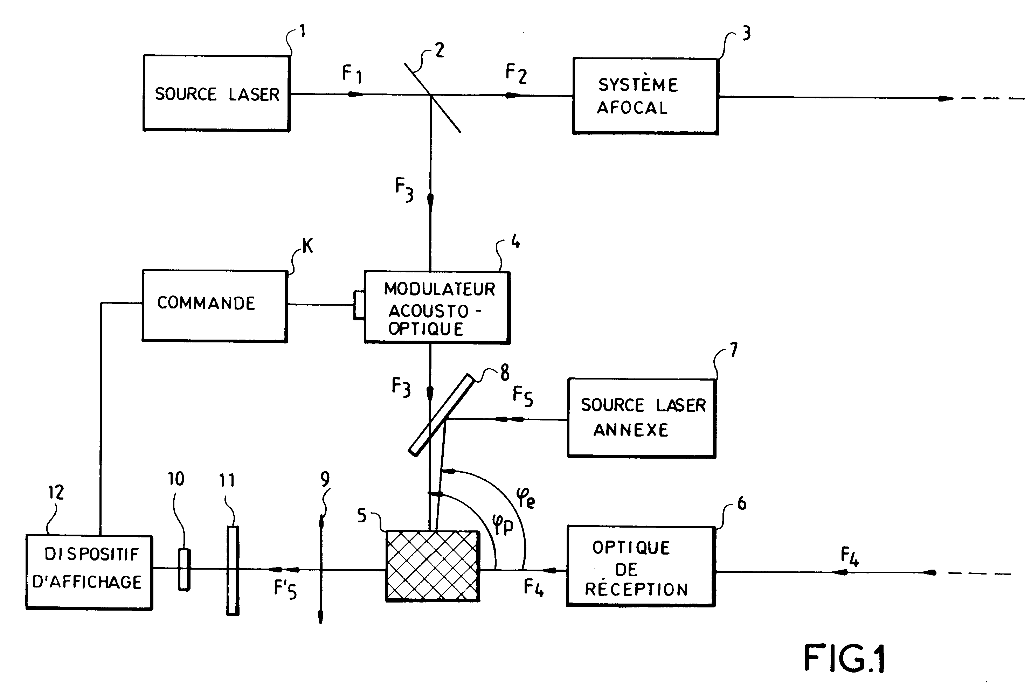

Sur la figure 1, il a été représenté une première source laser 1, par exemple un laser YAG/Nd, qui émet en continu un faisceau cohérent de lumière F1 à la fréquence $f_1$ correspondant à une longueur d'onde égale à 1,06 µm. Une lame séparatrice 2, partiellement réfléchissante, sépare le faisceau F1 en deux faisceaux F2 et F3, respectivement par transmission et réflexion.

Le faisceau F2 se dirige vers un système optique afocal 3, associé éventuellement à un zoom (non représenté), pour éclairer, selon une direction donnée, un objet dont on cherche à mesurer la vitesse. Le vélocimètre représenté est monté sur des moyens d'orientation classiques (non représenté) permettant d'orienter le faisceau F2 selon la direction donnée.

Le faisceau F3, d'autre part, traverse des moyens de décalage en fréquence 4 pour servir de pompe optique à fréquence réglable. Les moyens de décalage en fréquence sont constitués par exemple par un modulateur acoustooptique, ou par un modulateur électrooptique de phase. Le décalage souhaité est obtenu à l'aide d'une commande K permettant de régler la valeur de décalage. Par exemple, cette commande peut être un dispositif d'orientation d'un modulateur acoustooptique permettant de varier l'angle d'incidence du faisceau F3 sur ce modulateur, chaque direction correspondant à une fréquence angulaire particulière. De manière à conserver l'orientation du faisceau F3 conserve la même en entrée et en sortie du modulateur acoustooptique, celui-ci peut se composer de deux cubes acoustooptiques disposés tête-bêche. Le faisceau de pompe F3 émergeant du modulateur 4 se dirige vers un milieu d'interaction photoréfractif 5.

Lorsqu'un objet est éclairé par la source laser 1 à l'aide du faisceau F2, il réfléchit un faisceau F4, reçu par le milieu photoréfractif 5 après avoir traversé une optique de réception 6 adaptée de manière connue.

Le faisceau de pompe F3 et le faisceau réfléchi F4 interfèrent dans le milieu photoréfractif 5. Les caractéristiques physiques de ce milieu, et en particulier l'indice de réfraction, sont modulés spatialement par un réseau de franges R issues de cette interférence.

L'existence de cette modulation spatiale induit alors la création d'un hologramme dynamique lorsque la fréquence du faisceau de pompe F3 et du faisceau réfléchi F4 sont suffisamment proches. Plus précisément, le décalage de fréquences $\Delta f$ entre le faisceau de pompe et le faisceau réfléchi est suffisamment faible pour induire des variations du réseau de frange lentes par rapport à la constante de temps $\tau$ d'établissement de ce réseau. En d'autres termes, l'écart $\Delta f$ reste alors inférieur à $1/\tau = fo$. Dans l'exemple de réalisation, le modulateur acoustooptique 4 est ajusté par la commande K pour obtenir un écart $\Delta f$ inférieur à fo.

Dans ces conditions, le milieu photoréfractif moyenne les interférences inscrites dans l'hologramme dynamique pendant le temps $\tau$. . La valeur du temps $\tau$ ne dépend que de la densité de puissance de pompage utilisée et du matériau constituant le milieu d'interaction photoréfractif. Les matériaux photoréfractifs sont bien connus. Ce sont des matériaux électrooptiques photoconducteurs, tels que BSO (Oxyde de Bismuth et de Silicium), BGO (Oxyde de Bismuth et de Germanium),ou d'autres matériaux évoqués plus haut ; aux longueurs d'onde micrométriques de l'exemple de réalisation, le matériau le mieux adapté est le GaAs (Arséniure de Gallium). Ces matériaux sont habituellement utilisés pour l'amplification du signal optique en imagerie.

A titre d'exemple, pour une longueur d'onde du faisceau de pompe égale à 1,06 $\mu$m (obtenu par une source laser YAG/Nd), avec un matériau photoréfractif à base de GaAs et un pompage de quelques centaines de mW par cm$^2$, le temps de réponse $\tau$ est de l'ordre de la milliseconde.

La lecture de l'hologramme dynamique inscrit dans le milieu d'interaction 5 est effectué à l'aide d'un faisceau de lecture F5 (repéré par une double flèche) émis par une source laser impulsionnelle annexe 7. Afin de bénéficier complètement du phénomène d'amplification du milieu photoréfractif pour d'obtenir une sensibilité maximale du signal de lecture, il est prévu des moyens de discrimination entre le faisceau de lecture F5 et le faisceau de pompe F3. Ces moyens de discrimination résident principalement dans la nature différente de leur émission (impulsionnelle pour le premier et continue pour le second) et, éventuellement, dans une autre différence liée à au moins une caractéristique physique: fréquence ou polarisation des faisceaux.

Dans le premier exemple de réalisation de l'invention, tel qu'il est illustré à la figure 1, le faisceau de lecture F5 a une fréquence $f_2$ différente de celle $f_1$ du faisceau de pompe F3. Le faisceau de lecture F5 est, dans ces conditions, transmis vers le milieu photoréfractif 5 par réflexion sur une lame dichroïque 8. Les angles d'incidence du faisceau de pompe F3 et du faisceau de lecture F5 sur le milieu photoréfractif, respectivement appelés $\varphi_p$ et $\varphi_l$ lorsqu'ils sont rapportés au faisceau réfléchi F4 provenant de l'objet, sont alors différents.

En mode opératoire, un mobile (objet ou cible en mouvement) dont on cherche à mesurer la vitesse, est éclairé par le faisceau F2. Le faisceau F4 réfléchi par le mobile a une fréquence $f_r$ différente de $f_1$ du fait de l'effet Doppler, cette différence étant directement proportionnelle à la vitesse radiale Vr du mobile (Vr = module du vecteur vitesse projeté sur la direction de repérage du mobile). La fréquence du faisceau de pompe F3, initialement égale à $f_1$, est déplacée à l'aide des moyens de décalage 4 jusqu'à ce que la fréquence du faisceau de pompe soit égale à la fréquence $f_r$ du faisceau réfléchi F4, à $1/\tau$ près comme expliqué plus haut.

A cet instant, le faisceau de lecture F5 diffracte à travers ce réseau sous l'incidence de BRAGG. Cette diffraction provoque ainsi la lecture de l'hologramme inscrit dans le réseau d'indice, matérialisée par l'émergence du milieu 5 du faisceau de lecture F'5. Le faisceau émergeant est alors classiquement focalisé par une lentille 9 sur un détecteur 10. Un filtre interférentiel 11, centré sur la fréquence $f_2$ du faisceau de lecture peut être interposé en faisceau convergent entre le détecteur 10 et la lentille 9. Le détecteur 10 transmet alors un signal de détection à un dispositif d'affichage 12 qui enregistre la valeur du décalage de fréquence $\Delta f = f_1 - f_r$, cette valeur étant fournie par un signal provenant du dispositif de commande K. Le dispositif d'affichage, muni de moyens de calcul, peut alors calculer la vitesse du mobile qui est directement proportionnelle à $\Delta f$.

A titre d'exemple, et en reprenant les éléments numériques précédents (puissance de pompage de quelques centaines de nW/cm$^2$ et un milieu réfractif en GaAs), le temps de réponse a une valeur de l'ordre de la milliseconde et la précision sur le décalage en fréquence $\Delta f$ est donc de l'ordre du KHz ; avec une longueur d'onde de pompe de 1,06 $\mu$m (délivré par un laser YAG/Nd) des vitesses de quelques mm par seconde (sont détectables par déduction de la formule Doppler $\Delta f = 2Vr/f1$, f1 étant la fréquence du faisceau de pompe).

Le faisceau de lecture peut se différencier du faisceau de pompe par une longueur d'onde différente, comme illustrée par l'exemple de réalisation précédent. Par exemple le faisceau de lecture peut être émis par un laser YAG doublé en longueur d'onde par association avec un Oscillateur Paramétrique Optique. En mode pulsé, il peut délivrer des impulsions de largeur égale à quelques nanosecondes à la longueur d'onde de 2,12 $\mu$m.

En ce qui concerne l'amplification du faisceau de lecture dans le milieu photoréfractif, les éléments suivants sont à considérer.

La puissance crête $P_c$ de l'onde de lecture diffracte sur l'hologramme avec un rendement de diffraction $\eta$. Ce rendement dépend du rapport entre les puissances optiques $P_r$ et $P_{p'}$ respectivement du faisceau réfléchi F4 et du faisceau de pompe F3. Dans la majorité des cas (notamment le cas opérationnel), la puissance optique $P_r$ est très faible vis-à-vis de la puissance optique $P_p$. On montre alors que le rendement de diffraction $\eta$ est proportionnel à

$$\frac{P_r}{P_p}\left(\eta = \gamma\,\frac{P_r}{P_p}\ avec\ \gamma \geq 1\right).$$

D'autre part, le faisceau de lecture diffracté par l'hologramme F'5 a une puissance égale $\eta\,P_c$, (proche de $\gamma\,\frac{P_c}{P_p} \cdot P_r$). Le faisceau réfléchi F4 est alors amplifié à la fréquence du faisceau de lecture F5 dans la direction du faisceau de lecture diffractée F'5. L'amplification peut atteindre par exemple 1000 pour une onde de lecture de quelques Watts (par exemple 10 Watts) alors que la puissance du faisceau de pompe est de l'ordre d'une dizaine de milliwatts.

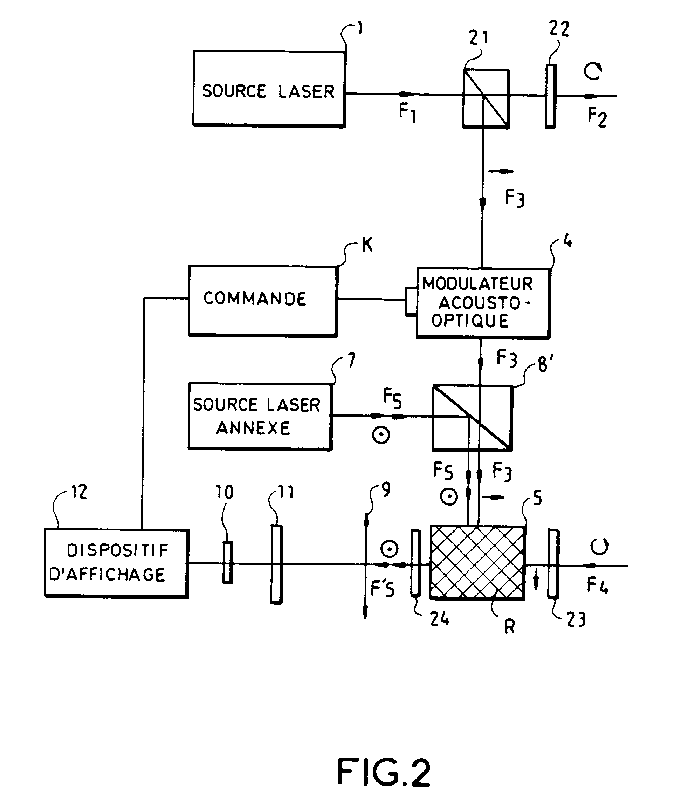

L'onde de lecture se différencie suffisamment de l'onde de pompe pour ne pas créer de réseau de diffraction parasite, ce qui réduirait notablement la sensibilité de la mesure. Il est possible de différencier le faisceau de lecture et le faisceau de pompe en utilisant d'autres caractéristiques physiques que la longueur d'onde, par exemple en mettant en oeuvre des faisceaux de polarisations croisées. La figure 2 illustre une telle mise en oeuvre. Les éléments identiques figurant sur les figures 1 et 2 portent de signes de références identiques.

Sur la figure 2, la séparation du faisceau F1 en F2 et F3 est réalisée à l'aide d'un polariseur 21. Le faisceau F2 d'illumination de cible subit à la sortie du polariseur 21 une polarisation circulaire, par exemple circulaire droite, ⊙ en traversant une lame quart d'onde 22. Le faisceau de pompe F3 est polarisé selon un plan de polarisation donné, par exemple horizontal (symbole →), alors que le faisceau de lecture F5 est polarisé selon un plan perpendiculaire, soit verticalement (symbole ⊙) dans l'exemple illustré. Les faisceaux de pompe et de lecture ont même longueur d'onde et sont donc colinéaires, après traversée d'un cube séparateur de polarisation 8', pour permettre une diffraction du faisceau de lecture selon l'angle de BRAGG dans le milieu d'interaction 5.

Le faisceau réfléchi provenant du mobile possède une polarisation circulaire gauche ⊙.. Afin de réaliser les interférences avec le faisceau de pompe, le faisceau réfléchi traverse une lame quart d'onde 23 afin d'être polarisé selon le plan horizontal (symbole de ↓ sur la figure) et interféré avec le faisceau de pompe F3 polarisé également horizontalement. Le faisceau diffractant dans le réseau d'indice du matériau photoréfractif 5 traverse un polariseur 24 afin de ne transmettre que le faisceau de lecture polarisé verticalement. Seul le faisceau de lecture est ainsi détecté par le détecteur 10 lorsque les fréquences du faisceau de pompe et du faisceau réfléchi sont rendues identiques à $1/\tau$ près.

L'invention n'est pas limitée aux exemples de réalisation décrits et représentés. En particulier pour diminuer sensiblement l'influence du fond de ciel, il est avantageux d'utiliser un faisceau de lecture dont la longueur d'onde soit fortement absorbée par l'atmosphère. Il est possible également, afin d'améliorer la précision de la mesure, de réaliser une détection synchrone à la fréquence d'émission du faisceau de lecture, la mise en oeuvre d'une telle détection étant connue de l'Homme de l'Art.

Par souci d'économie, il est possible de mettre en oeuvre une version du vélocimètre selon l'invention avec une source laser unique, couplée à des moyens connus pour fournir un faisceau continu d'illumination de cible et un faisceau pulsé de lecture.

Par ailleurs, les moyens de détection peuvent être un photodétecteur individuel en alliage de mercure de cadmium et de tellure (HgCdTe), en Antimoine d'indium (InSb) ou Platine silicium (PtSi), ou une matrice de photodiodes.

D'autre part, le réglage en fréquence peut être obtenu par une lame demi-onde animée d'un mouvement de rotation entre deux lames quart d'onde. Il est alors possible d'obtenir des décalages en fréquence de l'ordre du KHz. Il est également avantageux de remplacer la lame demi-onde par une matrice de cristaux liquides. Cette réalisation permet d'effectuer une analyse fréquentielle sur chaque pixel d'une matrice de photodétecteurs, ce qui permet de réduire sensiblement le temps de la mesure. Des procédés de réalisation de telles combinaisons de lames sont connus de l'Homme de l'Art.

## Revendications

1 - Vélocimètre à hologramme dynamique, comportant une source de lumière cohérente (1) délivrant un faisceau lumineux (F2) de fréquence $f_1$ pour éclairer un objet animé d'une vitesse radiale $V_r$, des moyens de mélange du faisceau (F4) émis par la source cohérente après rétroréflexion par l'objet et du faisceau (F3) dit de pompe émis par ladite source (1), des moyens de détection (10) pour délivrer un signal modulé en fonction de l'objet détecté par le faisceau d'éclairement (F2) et des moyens d'analyse de ce signal, caractérisé en ce que les moyens de mélange comporte un milieu d'interaction (5) dans lequel une modulation spatiale d'intensité lumineuse induit un hologramme dynamique inscrit dans un réseau d'indices de réfraction (R), en ce que le faisceau de pompe traverse des moyens de décalage en fréquence (4) avant d'interférer, dans le milieu d'interaction (5), avec le faisceau rétroréfléchi (F4) par l'objet, et en ce que le vélocimètre comporte une source de lumière impulsionnelle cohérente (7) émettant un faisceau de lecture (F5) vers le milieu d'interaction (5) pour être diffracté par le réseau d'indice et détecté par les moyens de détection (10) lorsque les moyens de décalage en fréquence (4) sont réglés pour que la différence de fréquences entre le faisceau de pompe (F3) et le faisceau réfléchi (F4) interférant dans le milieu d'interaction (5), soit inférieure à une valeur prédéterminée.

2 - Vélocimètre selon la revendication 1, caractérisé en ce que le faisceau de lecture (F5 a un coefficient d'absorption faible dans le milieu d'interaction (5) et élevé dans l'atmosphère.

3 - Vélocimètre selon les revendications 1 ou 2, caractérisé en ce que le milieu d'interaction (5) est un matériau photoréfractif à base de GaAs.

4 - Vélocimètre selon l'une des revendications précédentes, caractérisé en ce qu'il comporte en outre des moyens de discrimination (8, 8', 21 à 24) entre le faisceau de pompe (F3) et le faisceau de lecture (F5).

5 - Vélocimètre selon la revendication 4, caractérisé en ce que les faisceaux de pompe (F3) et de lecture (F5) ont des longueurs d'onde différentes, les moyens de discrimination comportant alors une lame dichroïque (8) réfléchissant le faisceau de lecture (F5) selon un angle ($\varphi_l$) d'attaque du milieu d'interaction (5) différent de l'angle ($\varphi_p$) du faisceau de pompe.

6 - Vélocimètre selon la revendication 4, caractérisé en ce que les moyens de discrimination comportent un polariseur (21) séparant le faisceau (F1) en faisceaux (F2, F3) de polarisations croisées et un cube séparateur de polarisation (8'), le faisceau de lecture (F5) et le faisceau pompe (F3) ayant des polarisations croisées et le faisceau de lecture après diffraction (F'5) traversant un polariseur (24) avant détection.

7 - Vélocimètre selon l'une des revendications précédentes, caractérisé en ce qu'une détection synchrone du faisceau de lecture (F'5) est effectuée à la fréquence d'émission f2 du faisceau de lecture (F5).

8 - Vélocimètre selon la revendication 1, caractérisé en ce que les moyens de décalage en fréquence (4) comportent une lame demi-onde animée d'un mouvement de rotation entre deux lames quart d'onde.

9 - Vélocimètre selon la revendication 1, caractérisé en ce que les moyens de décalage en fréquence (4) comportent une matrice de cristaux liquides et les moyens de détection (10) une matrice correspondante de photodétecteurs.

10 - Vélocimètre selon la revendication 1, caractérisé en ce que les moyens d'analyse de signal comportent un dispositif d'affichage (12) capable de calculer et d'afficher la valeur de la vitesse relative du mobile à partir des signaux fournis par les moyens de détection (10) et par une commande (K) des moyens de décalage (4).

FIG.1

EP 0 635 730 A1

FIG.2

Office européen
des brevets

**RAPPORT DE RECHERCHE EUROPEENNE**

Numero de la demande

EP 94 40 1580

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-5 164 784 (WAGGONER) <br> * colonne 3, ligne 67 - colonne 5, ligne 58; figures 1,2 * <br> --- | 1 | G01S17/58 <br> G01S7/48 |
| A | EP-A-0 503 574 (TELEDYNE INDUSTRIES) <br> * abrégé * <br> --- | 1 | |
| A | EP-A-0 355 018 (HONEYWELL) <br> * colonne 2, ligne 39 - colonne 4, ligne 22; figure 1 * <br> --- | 1 | |
| D,A | FR-A-2 541 786 (THOMSON-CSF) <br> * abrégé * <br> ----- | 1 | |

**DOMAINES TECHNIQUES RECHERCHES (Int.Cl.6)**

G01S
G01P

Le présent rapport a été établi pour toutes les revendications

| Lieu de la recherche | Date d'achèvement de la recherche | Examinateur |
|---|---|---|
| LA HAYE | 24 Octobre 1994 | Haffner, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)